# FASCICULE DE BREVET EUROPEEN

(11) **EP 3 661 818 B1**
(45) Date de publication et mention de la délivrance du brevet: **17.11.2021**
(21) Numéro de dépôt: 18758940.3
(22) Date de dépôt: 31.07.2018
(51) Int. Cl.: B60T 5/00, B61H 5/00, F16D 65/00, F16D 65/092, F16D 65/097, B60T 17/04, F16L 41/00, F16D 69/00, F16D 65/847

(54) **ENSEMBLE À FRICTION POUR SYSTÈME DE FREINAGE FERROVIAIRE**
SCHEINENFAHRZEUGBREMSSYSTEMBREMSBELAG
FRICTION SHOE FOR RAILWAY BRAKE SYSTEM

(30) Priorité: 01.08.2017 FR 1757392
(43) Date de publication de la demande: 10.06.2020
(73) Titulaire: Tallano Technologie, 92100 Boulogne Billancourt (FR)
(72) Inventeur: ROCCA-SERRA, Christophe, 75016 Paris (FR)
(74) Mandataire: Plasseraud IP
(86) Numéro de dépôt international: PCT/FR2018/051971
(87) Numéro de publication internationale: WO 2019/025723

(56) Documents cités:
- EP-A1- 2 725 255
- WO-A1-85/01565
- WO-A1-2008/091217
- FR-A1- 2 938 626
- GB-A- 2 492 858
- GB-A- 2 533 476
- GB-A- 2 540 361

## Description

### Domaine de l'invention

La présente invention est relative aux matériels roulants ferroviaires. Plus spécifiquement, l'invention concerne le freinage des matériels roulants ferroviaires et notamment les ensembles à friction des systèmes de freinage des matériels roulants ferroviaires. On notera que selon l'invention, tout objet configuré pour rouler sur des rails entre dans le champ de l'invention. Ainsi, la présente invention s'applique par exemple aussi bien aux trains, qu'aux tramways ou qu'aux métropolitains.

### Arrière-plan technologique de l'invention

Un matériel roulant ferroviaire, tel qu'une locomotive, une voiture ou un wagon, comprend habituellement un système de freinage. On trouve parmi plusieurs solutions possibles pour le freinage des solutions de freins à disques. Ainsi, le système de freinage comporte généralement un disque solidaire d'une roue ou d'un essieu du matériel roulant ferroviaire. Le système de freinage comporte en outre un ensemble à friction qui comprend un porte-semelle qui supporte une semelle de friction. La semelle de friction comprend usuellement des moyens de fixation au porte-semelle et un patin frottant. Lorsqu'un conducteur actionne le système de freinage, le patin frottant de la semelle de friction vient au contact du disque pour exercer une force de freinage sur le disque. Ainsi, par frottement, la semelle de friction freine le disque solidaire de la roue ou de l'essieu. Généralement, le matériel roulant ferroviaire comporte deux ensembles à friction, disposés de part et d'autre du disque de façon à prendre en tenaille, ou autrement dit en sandwich le disque pour le comprimer des deux côtés.

Le patin frottant de la semelle de friction comporte habituellement un matériau métallique, tel que la fonte, un matériau fritté ou un matériau composite. Ainsi, lorsque le patin frottant de la semelle de friction frotte contre le disque, des particules de matière issues du patin frottant sont émises dans l'atmosphère ambiante autour de l'ensemble à friction. Ainsi, le système de freinage émet une pollution atmosphérique sous forme de particules plus ou moins fines.

On a donc cherché à capter les particules de matière émises lors du freinage, notamment en disposant un dispositif de soufflage ou d'aspiration, alimenté par une pompe, à proximité d'une zone d'émission des particules issues du patin frottant de la semelle de friction.

Cependant, ces dispositifs opèrent dans un espace ouvert. En effet, la zone d'émission des particules issues du freinage, à savoir le patin frottant, n'est pas confinée. C'est pourquoi, le rendement, ou l'efficacité, du dispositif de soufflage ou d'aspiration est relativement faible. De plus, ces dispositifs s'intègrent difficilement dans l'architecture du matériel roulant ferroviaire. Le document GB2540361 décrit des moyens de ventilation d'une plaquette de frein pour refroidir et/ou réduire le couple de trainée.

### Objet de l'invention

Un but de l'invention est de fournir un ensemble à friction permettant de capter plus efficacement les particules émises par le patin frottant de la semelle de friction lors du cycle de freinage et qui s'intègre facilement dans l'architecture du matériel roulant ferroviaire.

### Bref résumé de l'invention

Pour ce faire, on prévoit selon l'invention un ensemble à friction pour système de freins à disques ferroviaire pour matériel roulant ferroviaire à un ou deux sens de circulation, ledit ensemble à friction est caractérisé en ce qu'il comprend :
- un porte-semelle comprenant une glissière d'accueil,
- une semelle de friction, comprenant un patin frottant et un profilé configuré pour être glissé dans la glissière d'accueil, la semelle de friction comprenant un conduit pneumatique mettant en communication un premier espace délimité par une première face de la semelle de friction et un second espace délimité par une seconde face opposée de la semelle de friction,
- au moins un trou traversant ménagé dans le porte-semelle et agencé de façon à être en regard du conduit pneumatique, et
- un raccord pneumatique monté sur le porte-semelle, en communication pneumatique avec le trou traversant, s'étendant à l'opposé de la semelle de friction et mobile en rotation par rapport au porte-semelle, autour d'un axe normal à un plan principal du porte-semelle.

Ainsi, les particules émises lors du freinage peuvent gagner le conduit pneumatique de la semelle de friction, puis le trou traversant ménagé dans le porte-semelle. Ensuite, elles gagnent le raccord pneumatique. Ainsi, en connectant le raccord pneumatique, par exemple au moyen d'un tuyau, à un système de récupération des particules de freinage, il est possible de connecter ces dernières. De plus, comme le raccord pneumatique est mobile en rotation autour de l'axe normal au plan principal du porte-semelle, il est possible de l'agencer facilement au sein du matériel roulant ferroviaire.

En outre, dans divers modes de réalisation de l'invention, on peut avoir également recours à l'une et/ou à l'autre des dispositions suivantes :
- le profilé est à queue d'aronde ;
- l'ensemble à friction comprend un tuyau en communication pneumatique avec le raccord pneumatique et s'étendant à l'opposé de la semelle de friction ;
- l'ensemble à friction comprend une pompe reliée, directement ou indirectement, au tuyau et configurée pour créer une dépression dans le trou traversant ;
- la glissière d'accueil du porte-semelle est borgne, à savoir avec une extrémité fermée et une extrémité ouverte formant une embouchure d'extraction et d'insertion de la semelle de friction, l'ensemble à friction comprend en outre un organe amovible de verrouillage de la semelle de friction dans la glissière d'accueil ;
- la semelle de friction comprend un premier organe et un second organe configurés pour être glissés dans la glissière d'accueil au contact l'un de l'autre au niveau d'une zone d'aboutement des premier et second organes en laissant un passage entre eux de façon à former le conduit pneumatique ;
- les premier et second organes forment chacun une moitié de la semelle de friction ;
- la semelle de friction peut également être monobloc ;
- les premier et second organes sont juxtaposés dans une direction tangentielle à un disque de freinage du matériel roulant ferroviaire ;
- le passage laissé à l'interface des premier et second organes est disposé dans une partie intermédiaire de la zone d'aboutement ;
- la zone d'aboutement est définie substantiellement comme un plan d'aboutement, les premier et second organes ont des longueurs similaires dans une direction longitudinale du porte-semelle, et le trou traversant présente un centre définissant un axe séparé du plan d'aboutement de moins de 5 mm ou confondu avec le plan d'aboutement ;
- l'ensemble à friction comprend une bague de jonction pneumatique agencée dans le conduit pneumatique formant un guide pneumatique entre le trou traversant du porte-semelle et le conduit pneumatique ;
- la bague de jonction pneumatique comporte une collerette reposant sur un fond de la glissière d'accueil et une portion cylindrique ;
- la portion cylindrique présente une hauteur équivalente à une hauteur du profilé à queue d'aronde.

On prévoit enfin selon l'invention un système de freins à disques ferroviaire pour matériel roulant ferroviaire à deux sens de circulation comprenant un disque solidaire d'un essieu ou d'une roue et deux ensembles à friction selon l'une quelconque des revendications précédentes disposés de part et d'autre du disque.

On prévoit également selon l'invention un ensemble à friction pour système de freins à disques ferroviaire pour matériel roulant ferroviaire à un ou deux sens de circulation, ledit ensemble à friction est caractérisé en ce qu'il comprend :
- un porte-semelle comprenant une glissière d'accueil,
- une semelle de friction, comprenant un patin frottant et un profilé configuré pour être glissé dans la glissière d'accueil, la semelle de friction comprenant un conduit pneumatique mettant en communication un premier espace délimité par une première face de la semelle de friction et un second espace délimité par une seconde face opposée de la semelle de friction,
- au moins un trou traversant ménagé dans le porte-semelle et agencé de façon à être en regard du conduit pneumatique, et
- une bague de jonction pneumatique agencée dans le conduit pneumatique formant un guide pneumatique entre le trou traversant du porte-semelle et le conduit pneumatique de la semelle de friction.

Ainsi, la semelle de friction comprend un conduit pneumatique qui forme, avec le trou traversant ménagé dans le porte-semelle, un circuit pneumatique qui permet d'aspirer des particules émises, par le patin frottant de la semelle de friction, lors du freinage. En outre, la bague de jonction pneumatique permet de guider les particules issues du freinage depuis le conduit pneumatique de la semelle de friction vers l'orifice traversant du porte-semelle. La bague de jonction pneumatique permet donc de limiter d'éventuelles fuites hors du circuit pneumatique. Notamment, la bague de jonction permet de limiter la quantité de particules issues du freinage qui se glissent dans un interstice disposé entre la semelle de friction et le porte-semelle. L'ensemble à friction selon l'invention permet donc d'aspirer une plus grande quantité de particules issues du freinage pour une même force d'aspiration. Il est donc plus efficace. L'ensemble à friction selon l'invention permet donc d'agencer simplement un circuit pneumatique pour évacuer les particules de freinage.

En outre, dans divers modes de réalisation de l'invention, on peut avoir également recours à l'une et/ou à l'autre des dispositions suivantes :
- le profilé est à queue d'aronde ;
- la bague de jonction pneumatique comporte une collerette reposant sur un fond de la glissière d'accueil et une portion qui a de préférence une forme conique ; cet agencement permet de former simplement le guide pneumatique ;

- on notera que, plus généralement, la portion peut avoir tout type de forme et peut notamment avoir une forme quelconque ;
- la portion conique est cylindrique ;
- la portion conique présente une hauteur équivalente à une hauteur du profilé ; cette configuration permet de guider efficacement les particules issues du freinage depuis le conduit pneumatique de la semelle de friction vers l'orifice traversant du porte-semelle ;
- la glissière d'accueil du porte-semelle est borgne, à savoir avec une extrémité fermée et une extrémité ouverte formant une embouchure d'extraction et d'insertion de la semelle de friction, l'ensemble à friction comprend en outre un organe amovible de verrouillage de la semelle de friction dans la glissière d'accueil ; ainsi, on peut facilement remplacer une semelle de friction si nécessaire ; la maintenance de l'ensemble à friction est donc plus facile ;
- la semelle de friction est formée par un premier organe et un second organe configurés pour être glissés dans la glissière d'accueil au contact l'un de l'autre au niveau d'une zone d'aboutement des premier et second organes en laissant un passage entre eux de façon à former le conduit pneumatique ;
- les premier et second organes forment chacun une moitié de la semelle de friction ; le passage laissé à l'interface des deux semelles de friction est formé dans une partie centrale d'une zone d'émission des particules émises lors du freinage ; l'aspiration des particules émises lors du freinage se donc fait de la même manière quelle que soit le sens de circulation du matériel roulant ferroviaire ; le comportement pneumatique de l'évacuation des particules émises lors du freinage est par conséquent plus simple à modéliser ;
- les premier et second organes sont juxtaposés dans une direction tangentielle à un disque de freinage du matériel roulant ferroviaire ;
- le passage laissé à l'interface des premier et second organes est disposé dans une partie intermédiaire de la zone d'aboutement ; il s'agit d'un agencement simple ;
- la zone d'aboutement est définie substantiellement comme un plan d'aboutement, les premier et second organes ont des longueurs similaires dans une direction longitudinale du porte-semelle, et le trou traversant présente un centre définissant un axe séparé du plan d'aboutement de moins de 5 mm ou confondu avec le plan d'aboutement ; le comportement aéraulique de l'ensemble à friction est donc symétrique, ce qui est avantageux étant donné que le matériel roulant ferroviaire est à deux sens de circulation;
- l'ensemble à friction comprend un raccord pneumatique monté sur le porte-semelle, en communication pneumatique avec le trou traversant et s'étendant à l'opposé de la semelle de friction ; le raccord pneumatique permet de diriger les particules issues du circuit pneumatique formé par le conduit de la semelle de friction et le trou traversant ménagé dans le porte-semelle vers un organe de collecte tel qu'un filtre ;
- le raccord pneumatique est mobile en rotation par rapport au porte-semelle, autour d'un axe normal à un plan principal du porte-semelle ; l'ensemble à friction peut donc être plus facilement intégré à un système de freinage du matériel roulant ferroviaire ; de plus, ce montage tolère des mouvements relatifs d'amplitude conséquente ;
- l'ensemble à friction comprend un tuyau en communication pneumatique avec le trou traversant et s'étendant à l'opposé de la semelle de friction ;
- l'ensemble à friction comprend une pompe reliée, directement ou non, au tuyau et configurée pour créer une dépression dans le trou traversant ; l'ensemble à friction permet donc d'aspirer les particules issues du freinage, à travers le circuit pneumatique formé par le conduit pneumatique de la semelle de friction et le trou traversant ménagé dans le porte-semelle.

On prévoit également selon l'invention un système de frein à disques ferroviaires pour matériel roulant ferroviaire à deux sens de circulation comprenant un disque solidaire d'un essieu ou d'une roue et deux ensembles à friction tels que précédemment décrit et disposés de part et d'autre du disque.

On notera par ailleurs que l'on peut bien entendu combiner des caractéristiques de l'ensemble à friction comportant la bague de jonction et de l'ensemble à friction comportant le raccord pneumatique.

### Brève description des dessins

On va maintenant décrire, à titre d'exemple non limitatif, quatre modes de réalisation de l'invention à l'aide des figures suivantes :
- la figure 1 est une vue en perspective d'un système de frein à disques ferroviaires selon l'invention,
- la figure 2 est une vue en perspective de deux ensembles à friction selon l'invention,
- la figure 3 est une vue en coupe de l'ensemble à friction selon un plan normal à un axe longitudinal de la semelle de friction,
- la figure 4 est une vue de dessus de l'ensemble à friction,
- la figure 5 est une vue de dessus éclatée de l'ensemble à friction,
- la figure 6 est une vue en perspective d'une bague de jonction pneumatique selon l'invention,
- la figure 7 est une vue en coupe d'un ensemble à friction, selon un second mode de réalisation de l'invention, selon un plan normal à un axe longitudinal d'une semelle de friction,
- la figure 8 est une vue de dessus de l'ensemble à friction selon ce second mode de réalisation,
- la figure 9 est une vue en coupe d'une semelle de friction de l'ensemble à friction selon le second mode, selon un plan normal à un axe longitudinal de la semelle de friction,
- la figure 10 est vue en coupe d'un ensemble à friction, selon un troisième mode de réalisation de l'invention, selon un plan normal à un axe longitudinal d'une semelle de friction, et
- la figure 11 est une vue de dessus d'un ensemble à friction selon un quatrième mode de réalisation de l'invention.

### Description détaillée d'un mode de réalisation de l'invention

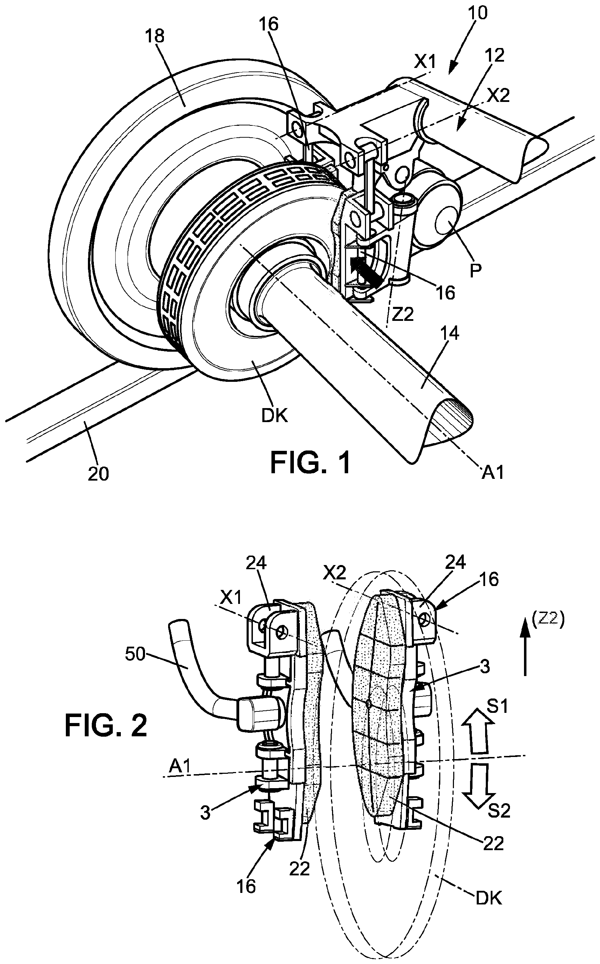

On a représenté sur la figure 1 une portion d'un matériel roulant ferroviaire 10 comprenant un système de freins à disques ferroviaire 12 selon l'invention. Dans ce mode de réalisation, le matériel roulant ferroviaire 10 est un train. On notera cependant que l'invention peut être mise en œuvre dans tout type de matériel roulant ferroviaire 10. Ce dernier peut donc être un métropolitain ou encore un tramway. De même, le matériel roulant ferroviaire 10 peut être une locomotive ou un wagon.

Le matériel roulant ferroviaire 10 comprend un essieu 14 qui comprend un axe principal A1, un disque DK et une roue 18. La roue 18 est disposée sur un rail 20 par rapport auquel elle peut se déplacer par rotation autour de l'axe A1. L'essieu 14, le disque DK et la roue 18 sont solidaires de sorte que l'essieu 14 est apte à transmettre un mouvement de rotation, autour de l'axe principal A1, au disque DK et à la roue 18. Le matériel roulant ferroviaire 10 est à deux sens de circulation. La roue 18 peut donc se déplacer dans le rail 20 dans deux sens opposés l'un par rapport à l'autre (voir S1 S2 sur la figure 2).

En outre, le système de freins à disques ferroviaire 12 est apte à exercer une pression sur le disque DK et ce, afin de freiner la rotation de la roue 18, autour de l'axe principal A1, et donc par conséquent un déplacement du matériel roulant ferroviaire 10 sur le rail 20. Pour ce faire, le système de freins à disques ferroviaire 12 comporte deux ensembles à friction 16 disposés de part et d'autre du disque DK. Ces deux ensembles à friction 16 sont aptes à être actionnés par un actionneur hydraulique ou pneumatique de façon à exercer une force de freinage symétrique sur le disque DK. On a notamment illustré sur la figure 2 l'agencement des deux ensembles à friction 16 de part et d'autre du disque DK illustré en traits mixtes.

Ainsi, comme représenté sur les figures 2 à 4 notamment, chaque ensemble à friction 16 du système de freins à disques ferroviaire 12 présente un axe longitudinal Z2 rapporté sur la figure 1, qui est confondu avec une direction tangentielle T du disque DK, et comporte un porte-semelle 3 qui supporte une semelle de friction 22. La semelle de friction 22 est destinée à entrer en contact direct avec le disque DK.

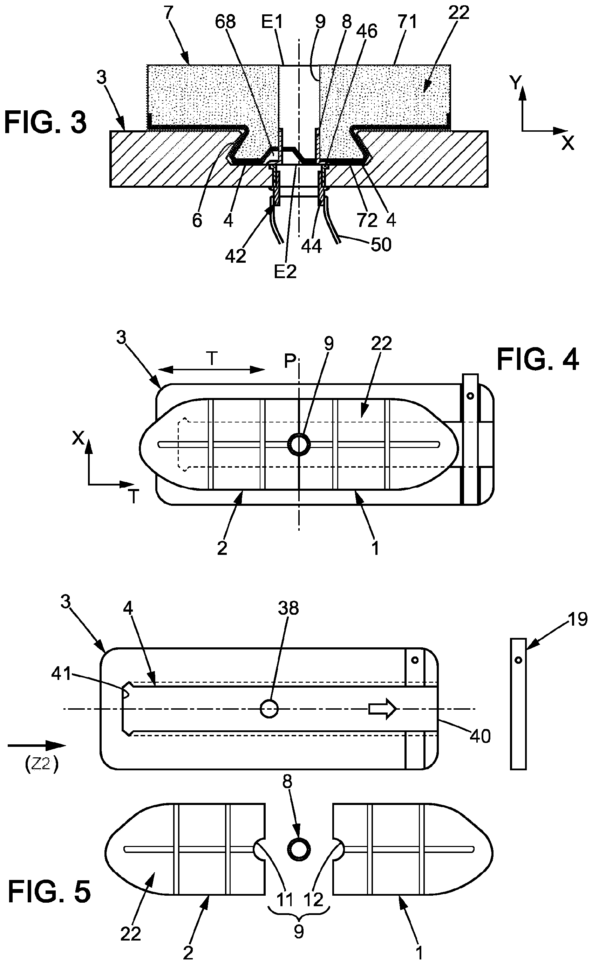

En outre, comme représenté sur les figures 3 et 4, chaque ensemble à friction 16 comprend un axe transversal X et un axe dit vertical Y, Y étant normal au plan de friction (Y est normal au plan de friction).

Le porte-semelle 3 comprend, à son extrémité longitudinale supérieure comme on le voit sur la figure 2, des moyens de fixation 24 à un corps du matériel roulant ferroviaire 10. Ces moyens de fixation 24 se présentent sous la forme de deux orifices traversant, disposés en regards l'un de l'autre, formant ainsi un axe respectif X1, X2 pour accueillir des moyens de fixation complémentaires portés par le corps du matériel roulant ferroviaire 10. Les axes X1, X2 s'étendent normalement à l'axe A1 et à l'axe Z2. Les axes X1, X2 sont dans l'exemple illustré substantiellement parallèles à la direction de déplacement du matériel ferroviaire sur la voie ferrée.

En outre, le porte-semelle 3 comprend une glissière d'accueil 4 qui s'étend longitudinalement le long du porte-semelle 3 et qui permet d'accueillir la semelle de friction 22. Comme on le note sur la figure 5, la glissière d'accueil 4 est borgne. Ainsi, elle comprend une extrémité fermée 41 et une extrémité ouverte 40. Cette extrémité ouverte 40 a pour fonction de former une embouchure d'extraction et d'insertion de la semelle de friction 22. Pour positionner la semelle de friction 22 dans la glissière d'accueil 4, le porte-semelle 3 comprend en outre un organe amovible de verrouillage 19 qui se présente sous la forme d'un organe longiligne 19 et qui s'étend sensiblement normalement à la glissière d'accueil 4 de façon à obstruer l'extrémité ouverte 40 de la glissière d'accueil 4. L'organe amovible de verrouillage 19 peut ainsi être solidarisé au porte-semelle 3 pour emprisonner la semelle de friction 22 dans la glissière d'accueil 4. L'organe amovible de verrouillage 19 peut se présenter comme une épingle robuste dont l'une des branches vient se loger dans une rainure complémentaire en creux agencée sur le porte-semelle 3.

De plus, le porte-semelle 3 comprend un trou traversant 38 disposé sensiblement au centre de la glissière d'accueil 4. Le trou traversant 38 présente un centre qui définit un axe principal A8 parallèle à l'axe vertical Y de l'ensemble à friction 16. Cet axe principal A8 est de plus normal à un plan principal XY du porte-semelle 3. Cet axe est également normal à un plan principal du trou traversant 38.

Comme on l'observe sur la figure 3, la semelle de friction 22 comprend un patin frottant 7 qui a pour fonction d'entrer en contact avec le disque DK. Ainsi, la semelle de friction comprend une première face 71 destinée à entrer en contact direct avec le disque DK. La semelle de friction 22 comprend aussi un profilé à queue d'aronde 6 qui s'élargit en s'éloignant du patin frottant. Le profilé est ici du type à queue d'aronde 6, ce qui signifie qu'il présente une section de forme trapézoïdale, et est en outre complémentaire d'un profil de la glissière d'accueil 4 du porte-semelle 3. Ainsi, le profilé à queue d'aronde 6 est configuré pour être glissé dans la glissière d'accueil 4 du porte-semelle 3. Ainsi, la semelle de friction 3 comporte une seconde face 72, opposée à la première face 71, qui est en contact direct avec un fond du porte-semelle 3. On notera par ailleurs que selon l'invention, le profilé peut avoir une section de forme de quadrilatère. Plus généralement, le profilé peut présenter une section qui a tout type de forme.

Le profilé à queue d'aronde 6 comportant dans l'exemple illustré une rainure longitudinale 68 qui s'étend sur toute la longueur du profilé à queue d'aronde 6. Le profilé à queue d'aronde 6 peut être obtenu à partir d'un profilé métallique extrudé coupé à la longueur à la demande. La matière utilisée peut être de l'acier inoxydable ou un alliage d'aluminium haute performance.

En outre, comme notamment illustré sur la figure 4, la semelle de friction 22 comprend un premier organe 1 et un second organe 2 qui ont forment chacun une moitié de la semelle de friction 22. Plus généralement, ils ont au moins des longueurs similaires selon l'axe longitudinal Z2. Ils sont configurés pour être glissés, l'un à la suite de l'autre, dans la glissière d'accueil 4. Ils sont ainsi juxtaposés, au contact l'un de l'autre, dans la direction tangentielle T, rapportée sur la figure 5, du disque DK comme on le constate en superposant les figures 1 et 5. Le contact entre les premier 1 et second 2 organes se fait au niveau d'une zone d'aboutement qui est, comme représenté sur la figure 4, un plan d'aboutement P.

De plus, comme illustré sur la figure 5, le premier organe 1 comprend, à son extrémité longitudinale en regard du second organe 2, un évidement 11 de forme semi-circulaire lorsqu'il est vu de dessus et qui s'étend sur toute l'épaisseur du premier organe 1. De la même manière, le second organe 2 comprend, à son extrémité longitudinale en regard du premier organe 1, un évidement 12 de forme semi-circulaire et dont les dimensions sont identiques à celles de l'évidement 11 du premier organe. Ainsi, au niveau du plan d'aboutement P entre les premier 1 et second 2 organes, ces derniers laissent un passage formé par les deux évidements 11, 12 respectifs des premier 1 et second 2 organes. Ce passage est disposé dans une partie intermédiaire du plan d'aboutement P, à savoir au milieu selon la direction transversale X. Comme indiqué sur la figure 3, ce passage forme un conduit pneumatique 9 qui met en communication de fluide un premier espace El qui est délimité par la face 71 de la semelle de friction 22 et un second espace E2 délimité par la seconde face 72 de la semelle de friction 22. Le trou traversant 38 ménagé dans le porte-semelle 3 est disposé en regard du conduit pneumatique 9. L'axe principal A8 du trou traversant 38 appartient au plan d'aboutement P. De manière plus générale, l'axe A8 du trou traversant 38 est confondu avec le plan d'aboutement P ou alors séparé, ou à distance, du plan d'aboutement de moins de 5 millimètres. Ainsi, le trou traversant 38 et le conduit pneumatique 9 forment un circuit pneumatique continue.

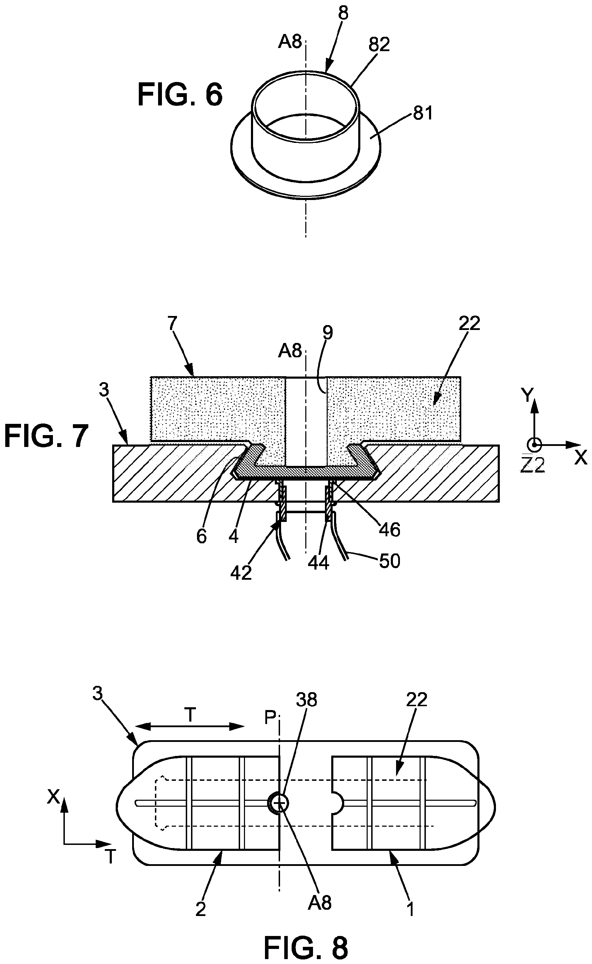

L'ensemble à friction 16 comporte également une bague de jonction pneumatique 8 représentée notamment à la figure 6. La bague de jonction pneumatique 8 comporte une collerette 81 qui s'étend en anneau transversalement à l'axe A8. À partir de l'intérieur de cette collerette 81 s'étend une portion conique qui est ici une portion cylindrique 82. On notera en outre que la portion peut présenter tout type de forme et notamment une forme quelconque. Comme indiqué sur la figure 3, la bague de jonction pneumatique 8 est agencée dans le conduit pneumatique 9 de sorte que le la collerette 81 repose sur le fond de la glissière d'accueil 4. La collerette 81 est en contact direct avec la face 72 de la semelle de friction 22. La portion cylindrique 82 de la bague de jonction pneumatique 8 s'étend dans des parois internes du conduit pneumatique 9 formées par les évidements 11 et 12 des premier 1 et second 2 organes pratiquement sans jeu c'est-à-dire sans fuite pneumatique. En outre, comme illustré sur la figure 3, une hauteur de la portion cylindrique 82 est équivalente à une hauteur du profilé à queue d'aronde 6 de la semelle de friction 22. On notera par ailleurs que la hauteur de la portion cylindrique 82 est équivalente à une hauteur de la rainure longitudinale 68.

Ainsi, la bague de jonction pneumatique 8 forme un guide pneumatique entre le trou traversant 38 du porte-semelle 3 et le conduit pneumatique 9 de la semelle de friction 22. En effet, une large proportion du flux d'air entrant dans le conduit pneumatique 9 depuis l'espace El et dirigé verticalement vers le bas ne peut qu'atteindre le trou traversant 38. En effet, la bague de jonction pneumatique 8 limite les fuites selon la direction X dans l'interstice disposé entre la face 72 de la semelle de friction 22 et le fond de la glissière d'accueil 4 en contact direct avec la face 72 et aussi par la rainure longitudinale 68 du profilé en queue d'aronde.

L'ensemble à friction 16 comprend par ailleurs un premier raccord 42 disposé à l'intérieur du trou traversant 38 du porte-semelle 3. Ce premier raccord 42 comporte un premier organe 44 fixé à un second organe 46. Cette fixation peut notamment être une fixation par vissage ou par clipsage. Le premier organe 44 s'étend, en étant opposé à la semelle de friction 22, partiellement au-delà du trou traversant 38, tandis que le second organe 46 est disposé dans le trou traversant 38. L'ensemble à friction 16 comprend aussi un tuyau souple 50 qui est relié au premier raccord 42. Pour ce faire, le tuyau souple 50 est relié au premier organe 44 du premier raccord 42. Ainsi, le tuyau souple 50 s'étend à l'opposé de la semelle de friction 22. On notera également que selon une variante, le premier raccord 42 peut être formé d'un seul tenant. Dans ce cas, le premier organe 44 et le second organe 46 sont venus de matière.

Ainsi, l'ensemble à friction 16 comprend un circuit pneumatique comportant le conduit pneumatique 9, la bague de jonction pneumatique 8, le premier raccord 42 et le tuyau souple 50. Le tuyau souple 50 est avantageusement relié à un réservoir de récupération des particules issues du freinage. En outre, l'ensemble à friction 16 comprend une pompe apte à créer une dépression dans le circuit pneumatique mentionné ci-dessus et notamment dans le trou traversant 38 et un élément filtrant pour piéger les particules aspirées.

On va maintenant décrire une récupération des particules issues du freinage du matériel roulant ferroviaire 10.

Lorsque le système de freins à disques ferroviaire 12 est actionné, l'actionneur est sollicité de sorte que les patins frottant 7 des semelles de friction 22 respectives des deux ensembles à friction 16 entrent en contact direct avec le disque DK. En conséquence, en raison du frottement entre le disque DK qui est en rotation et le patin frottant 7, des particules issues du freinage sont émises par les patins frottant 7 dans l'espace El.

Simultanément, il est créé une dépression dans le circuit pneumatique formé par le conduit pneumatique 9, la bague de jonction pneumatique 8, le premier raccord 42 et le tuyau souple 50.
La dépression peut être créée par une pompe, par exemple une pompe à vide, ou un système à venturi à proximité de l'ensemble de freinage ou à distance de ce dernier.

Ainsi, les particules issues du freinage, initialement dans l'espace El, gagnent le conduit pneumatique 9. Ensuite, elles atteignent la bague de jonction pneumatique 8, le premier raccord 42 et le tuyau souple 50 pour gagner le réservoir de récupération des particules de freinage. Comme précédemment indiqué, la bague de jonction pneumatique 8 empêche les particules de freinage de gagner l'interstice disposé entre la face 72 de la semelle de friction 22 et le fond de la glissière d'accueil 4 en contact direct avec la face 72. Une quantité importante de particules issues du freinage sont ainsi récupérées. L'ensemble à friction selon l'invention est donc moins polluant.

On va maintenant décrire trois autres modes de l'invention à l'aide des figures 7 à 11. Seules les différences avec le premier mode de réalisation vont être explicitées. Les références numériques des objets identiques restent inchangées.

Selon le second mode de réalisation illustré aux figures 7 à 9, le profilé à queue d'aronde 6 du patin frottant 7 ne comprend pas la rainure longitudinale 68 illustrée à la figure 3.

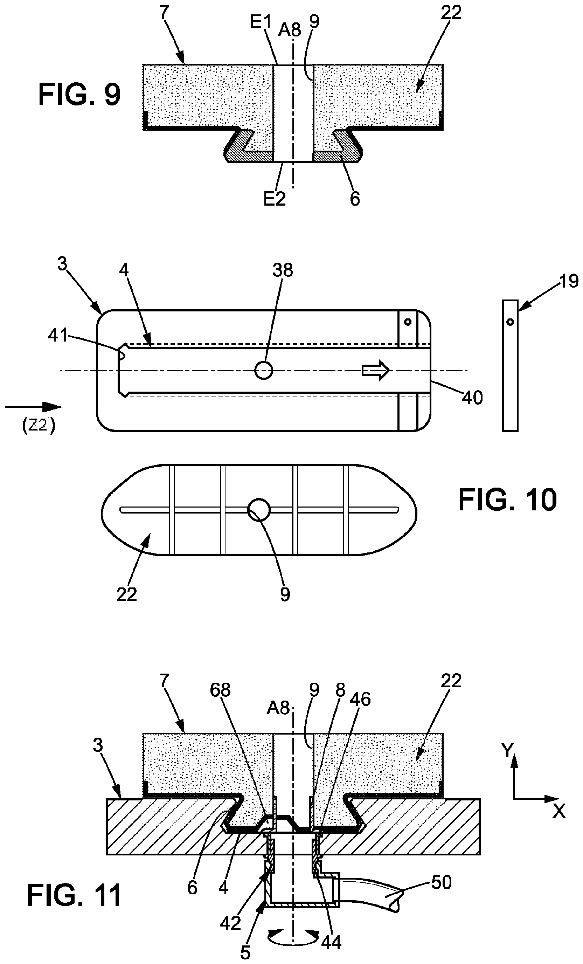

Selon le troisième mode de réalisation illustré à la figure 10, la semelle de friction 22 peut être monobloc.

On a représenté à la figure 11 un ensemble à friction 16 selon un quatrième mode de réalisation de l'invention. L'ensemble à friction 16 comporte un raccord pneumatique 5 monté sur le premier organe 44 du premier raccord 42. Le positionnement du raccord pneumatique 5 par rapport au premier organe 44 peut être effectué par vissage ou clipsage. Ainsi, le raccord pneumatique 5 est monté sur le porte-semelle 3 et s'étend à l'opposé de la semelle de friction 7.

Le raccord pneumatique 5 est donc en communication pneumatique d'une part avec le trou traversant 38 ménagé dans le porte-semelle 3 et d'autre part avec le tuyau souple 50. Le tuyau souple 50 s'étend à l'opposé de la semelle de friction 22 par rapport au raccord pneumatique 5. De plus, le raccord pneumatique 5 est mobile en rotation par rapport au porte-semelle 3 et à la semelle de friction 22 autour de l'axe A8 qui est, comme indiqué ci-dessus, normal au plan principal XY du porte-semelle 3 comme illustré par la flèche disposée à proximité du raccord pneumatique 5.

Ainsi, le raccord pneumatique 5 s'intègre plus facilement dans l'architecture du matériel roulant ferroviaire 10. En effet, il permet d'orienter le tuyau souple 50 par rapport à l'axe A8.

On notera que les caractéristiques des divers modes de réalisation de l'invention peuvent être combinées, dans la mesure où elles ne sont pas incompatibles entre elles.

De plus, on pourra bien entendu apporter à l'invention de nombreuses modifications sans sortir du cadre de celle-ci.

Notamment, la semelle de friction 22 pourra comprendre plusieurs organes 1, 2. Par exemple, la semelle de friction 22 pourra comporter trois ou quatre organes 1, 2.

De même, le porte-semelle 3 pourra ne pas être monobloc et comporter plusieurs organes distincts.

Le porte-semelle 3 pourra comprendre au moins deux trous traversant 38.

## Revendications

1. Ensemble à friction (16) pour système de freins à disques ferroviaire (12) pour matériel roulant ferroviaire (10) à un ou deux sens de circulation (S1, S2), ledit ensemble à friction (16) est **caractérisé en ce qu'**il comprend :
- un porte-semelle (3) comprenant une glissière d'accueil (4),
- une semelle de friction (22), comprenant un patin frottant (7) et un profilé (6) configuré pour être glissé dans la glissière d'accueil (4), la semelle de friction (22) comprenant un conduit pneumatique (9) mettant en communication un premier espace (E1) délimité par une première face (71) de la semelle de friction (22) et un second espace (E2) délimité par une seconde face (72) opposée de la semelle de friction (22),
- au moins un trou traversant (38) ménagé dans le porte-semelle (3) et agencé de façon à être en regard du conduit pneumatique (9), et
- un raccord pneumatique (5) monté sur le porte-semelle (3), en communication pneumatique avec le trou traversant (38), s'étendant à l'opposé de la semelle de friction (22) et mobile en rotation par rapport au porte-semelle (3), autour d'un axe (A8) perpendiculaire à un plan principal (XY) du porte-semelle (3).

2. Ensemble à friction (16) selon l'une quelconque des revendications précédentes, comprenant un tuyau (50) en communication pneumatique avec le raccord pneumatique (5) et s'étendant à l'opposé de la semelle de friction (22).

3. Ensemble à friction (16) selon la revendication précédente, comprenant une pompe (P) reliée au tuyau (50) et configurée pour créer une dépression dans le trou traversant (38).

4. Ensemble à friction (16) selon l'une quelconque des revendications précédentes, dans lequel la glissière d'accueil (4) du porte-semelle (3) est borgne, à savoir avec une extrémité fermée (41) et une extrémité ouverte (40) formant une embouchure d'extraction et d'insertion de la semelle de friction (22), l'ensemble à friction (16) comprend en outre un organe amovible de verrouillage (19) de la semelle de friction (22) dans la glissière d'accueil (4).

5. Ensemble à friction (16) selon l'une quelconque des revendications précédentes, dans lequel la semelle de friction (22) comprend un premier organe (1) et un second organe (2) configurés pour être glissés dans la glissière d'accueil (4) au contact l'un de l'autre au niveau d'une zone d'aboutement des premier (1) et second (2) organes en laissant un passage entre eux de façon à former le conduit pneumatique (9).

6. Ensemble à friction (16) selon la revendication précédente, dans lequel les premier (1) et second (2) organes forment chacun une moitié de la semelle de friction (22).

7. Ensemble à friction (16) selon l'une quelconque des revendications 5 et 6, dans lequel la zone d'aboutement est définie substantiellement comme un plan d'aboutement (P), les premier (1) et second (2) organes ont des longueurs similaires dans une direction longitudinale (Z2) du porte-semelle (3), et le trou traversant (38) présente un centre définissant un axe (A8) confondu avec le plan d'aboutement (P).

8. Ensemble à friction (16) selon l'une quelconque des revendications 1 à 4, dans lequel la semelle de friction (22) est monobloc.

9. Ensemble à friction (16) selon l'une quelconque des revendications précédentes, comprenant une bague de jonction pneumatique (8) agencée dans le conduit pneumatique (9) formant un guide pneumatique entre le trou traversant (38) du porte-semelle (3) et le conduit pneumatique (9).

10. Système de freins à disques ferroviaire (12) pour matériel roulant ferroviaire (10) à un ou deux sens de circulation (S1, S2), comprenant un disque (DK) solidaire d'un essieu (14) ou d'une roue (18) et deux ensembles à friction (16) selon l'une quelconque des revendications précédentes disposés de part et d'autre du disque (DK).

## Patentansprüche

1. Reibbaugruppe (16) für ein Scheibenbremssystem der Eisenbahn (12) für rollendes Eisenbahnmaterial (10) mit ein oder zwei Fahrtrichtungen (S1, S2), wobei die Reibbaugruppe (16) **dadurch gekennzeichnet ist, dass** sie umfasst:
- einen Belagträger (3), der eine Aufnahmegleitschiene (4) umfasst,
- einen Reibbelag (22), der einen Schleifschuh (7) und ein Profilteil (6), das dafür ausgelegt ist, in der Aufnahmegleitschiene (4) gleitend bewegt zu werden, umfasst, wobei der Reibbelag (22) eine pneumatische Leitung (9) umfasst, die einen ersten Raum (E1), der von einer ersten Seite (71) des Reibbelages (22) begrenzt wird, und einen zweiten Raum (E2), der von einer gegenüberliegenden zweiten Seite (72) des Reibbelages (22) begrenzt wird, in Verbindung bringt,
- mindestens ein Durchgangsloch (38), das in dem Belagträger (3) ausgebildet ist und so angeordnet ist, dass es sich gegenüber der pneumatischen Leitung (9) befindet, und
- ein pneumatisches Anschlussstück (5), das am Belagträger (3) angebracht ist, mit dem Durchgangsloch (38) in pneumatischer Verbindung steht, sich gegenüber dem Reibbelag (22) erstreckt und in Bezug auf den Belagträger (3) drehbeweglich um eine Achse (A8) ist, die zu einer Hauptebene (XY) des Belagträgers (3) senkrecht ist.

2. Reibbaugruppe (16) nach einem der vorhergehenden Ansprüche, welche einen Schlauch (50) umfasst, der mit dem pneumatischen Anschlussstück (5) in pneumatischer Verbindung steht und sich gegenüber dem Reibbelag (22) erstreckt.

3. Reibbaugruppe (16) nach dem vorhergehenden Anspruch, welche eine Pumpe (P) umfasst, die mit dem Schlauch (50) verbunden ist und dafür ausgelegt ist, in dem Durchgangsloch (38) einen Unterdruck zu erzeugen.

4. Reibbaugruppe (16) nach einem der vorhergehenden Ansprüche, wobei die Aufnahmegleitschiene (4) des Belagträgers (3) einseitig verschlossen ist, nämlich mit einem geschlossenen Ende (41) und einem offenen Ende (40), das eine Mündung zum Herausziehen und Einsetzen des Reibbelages (22) bildet, versehen ist, wobei die Reibbaugruppe (16) außerdem ein lösbares Organ zur Verriegelung (19) des Reibbelages (22) in der Aufnahmegleitschiene (4) umfasst.

5. Reibbaugruppe (16) nach einem der vorhergehenden Ansprüche, wobei der Reibbelag (22) ein erstes Organ (1) und ein zweites Organ (2) umfasst, die dafür ausgelegt sind, in der Aufnahmegleitschiene (4), im Kontakt miteinander an einem Stoßbereich des ersten (1) und des zweiten (2) Organs, gleitend bewegt zu werden, wobei ein Durchlass zwischen ihnen belassen wird, um die pneumatische Leitung (9) zu bilden.

6. Reibbaugruppe (16) nach dem vorhergehenden Anspruch, wobei das erste (1) und das zweite (2) Organ jeweils eine Hälfte des Reibbelages (22) bilden.

7. Reibbaugruppe (16) nach einem der Ansprüche 5 und 6, wobei der Stoßbereich im Wesentlichen als eine Stoßebene (P) definiert ist, das erste (1) und das zweite (2) Organ in einer Längsrichtung (Z2) des Belagträgers (3) ähnliche Längen aufweisen und das Durchgangsloch (38) eine Mitte aufweist, die eine Achse (A8) definiert, die in der Stoßebene (P) verläuft.

8. Reibbaugruppe (16) nach einem der Ansprüche 1 bis 4, wobei der Reibbelag (22) einstückig ist.

9. Reibbaugruppe (16) nach einem der vorhergehenden Ansprüche, welche einen in der pneumatischen Leitung (9) angeordneten pneumatischen Verbindungsring (8) umfasst, der eine pneumatische Führung zwischen dem Durchgangsloch (38) des Belagträgers (3) und der pneumatischen Leitung (9) bildet.

10. Scheibenbremssystem der Eisenbahn (12) für rollendes Eisenbahnmaterial (10) mit ein oder zwei Fahrtrichtungen (S1, S2), welches eine mit einer Achse (14) oder mit einem Rad (18) fest verbundene Scheibe (DK) und zwei Reibbaugruppen (16) nach einem der vorhergehenden Ansprüche, die beiderseits der Scheibe (DK) angeordnet sind, umfasst.

## Claims

1. A friction set (16) for a railway disk brake system (12) for railway rolling stock (10) with one or two directions of movement (S1, S2), wherein said friction set (16) is **characterized in that** it comprises:
- a shoe holder (3) comprising a receiving slideway (4);
- a friction shoe (22) comprising a brake pad (7) and a profiled shape (6) configured for being slid into the receiving slideway (4), where the friction shoe (22) comprises a pneumatic conduit (9) connecting a first space (E1) delimited by a first surface (71) of the friction shoe (22) to a second space (E2) delimited by a second opposite surface (72) the friction shoe (22);
- at least one through hole (38) arranged in the shoe holder (3) and laid out so as to be facing the pneumatic conduit (9); and
- a pneumatic connector (5) mounted on the shoe holder (3), pneumatically connected with the through hole (38), extending away from the friction shoe (22) and rotationally mobile relative to the shoe holder (3), around an axis (A8) perpendicular to a main plane (XY) of the shoe holder (3).

2. The friction set (16) according to any one of the preceding claims comprising a hose (50) pneumatically connected with the pneumatic connector (5) and extending away from the friction shoe (22).

3. The friction set (16) according to the preceding claim comprising a pump (P) connected to the hose (50) and configured for creating reduced pressure in the through hole (38).

4. The friction set (16) according to any one of the preceding claims, wherein the receiving slideway (4) of the shoe holder (3) is blind, specifically with one closed end (41) and one open end (40) forming an opening for the extraction and insertion of the friction shoe (22), where the friction set (16) further comprises a removable member for locking (19) the friction shoe (22) in the receiving slideway (4).

5. The friction set (16) according to any one of the preceding claims, wherein the friction shoe (22) comprises a first member (1) and a second member (2) configured for being slid in the receiving slideway (4) until contact of each other in an area of butting of the first (1) and second (2) members while leaving a passage therebetween so as to form the pneumatic conduit (9).

6. The friction set (16) according to the preceding claim, wherein the first (1) and second (2) members each form one half of the friction shoe (22).

7. The friction set (16) according to any one of claims 5 and 6, wherein the butting zone is substantially defined as a butting plane (P), the first (1) and second (2) members have similar lengths in a longitudinal direction (Z2) of the shoe holder (3), and the through hole (38) has a center defining an axis (A8) coincident with the butting plane (P).

8. The friction set (16) according to any one of claims 1 to 4, wherein the friction shoe (22) is unitary.

9. The friction set (16) according to any one of the preceding claims comprising a pneumatic junction ring (8) laid out in the pneumatic conduit (9) forming a pneumatic guide between the through hole (38) of the shoe holder (3) and the pneumatic conduit (9).

10. A railway disk brake system (12) for railway rolling stock (10) with one or two directions of movement (S1, S2) comprising a disk (DK) secured to an axle (14) or a wheel (18) and two friction sets (16) according to any one of the preceding claims arranged on either side of the disk (DK).
